# EUROPÄISCHE PATENTANMELDUNG

(11) **EP 0 733 817 A2**
(43) Veröffentlichungstag der Anmeldung: **25.09.1996**
(21) Anmeldenummer: 96101580.7
(22) Anmeldetag: 05.02.1996
(51) Int. Cl.: F16D 3/84, F16C 1/04, F16D 3/06

(54) **Schutzvorrichtung für eine Gelenkwelle**

(30) Priorität: 20.03.1995 DE 19510077
(71) Anmelder: GKN Walterscheid GmbH, D-53797 Lohmar (DE)
(72) Erfinder: Kämpf, Klaus, Dipl.-Ing., D-53797 Lohmar (DE)
(74) Vertreter: Harwardt, Günther

(57) **Zusammenfassung**

Die Erfindung betrifft eine Schutzvorrichtung für eine Gelenkwelle, bei der die Lagereinheit für das Schutzrohr ein Anschlußelement 18 umfaßt, auf dem ein das Gelenk zumindest teilweise überdeckender Schutztrichter 17 axial festgelegt ist. Zur Verbindung ist eine Art Bajonettverschluß vorgesehen, wobei in der einen Position der Schutztrichter über radial vorstehende Haltelaschen 21,21',21'',21''' eines Lagerringes 19 der Lagereinheit hinwegbewegt werden kann. Nach Verdrehen des Schutztrichters 17 im Verhältnis zum Anschlußelement 18 verriegelt der Schutztrichter 17' den Lagerring 19 im Anschlußelement 18 und er selbst wird durch einen Sicherungsansatz 35, der an einer federnden Sicherungslasche 33 angebracht ist, in dieser Drehposition zum Anschlußelement 18 gesichert. Dabei greift der Sicherungsansatz 35 der Sicherungslasche 35 in eine Sicherungsausnehmung 27 des Anschlußelementes 18 ein. Um die Verbindung lösen zu können, muß die Sicherungslasche 33 soweit elastisch verbogen werden, daß der Sicherungsansatz 35 aus der Sicherungsausnehmung 27 austritt.

Hierdurch ist es möglich, eine Schutzvorrichtung zu schaffen, bei der die Sicherungspositionen nur durch ein Werkzeug, d. h. wissentlich aufgehoben werden kann, während die Sicherungsposition automatisch bei Erreichen einer vorgegebenen Drehstellung des Schutztrichters 17 unter der federnden Wirkung der Sicherungslasche 33 eingenommen wird.

## Beschreibung

Die Erfindung betrifft eine Schutzvorrichtung für eines, zumindest zwei Gelenke und eine aus zwei Schiebeprofilen bestehende Längsverschiebung umfassende Gelenkwelle, die für den Antrieb oder Antriebe in Landmaschinen bzw. landwirtschaftlichen Geräten gedacht ist, mit zwei zu den Schiebeprofilen koaxialen, ineinander teleskopartig verschiebbaren Schutzrohren, mit jeweils einer am freien Ende der Schutzrohre angebrachten Lagereinheit, die ein Anschlußelement und einen diesem zugeordneten Lagerring umfaßt, wobei die Lagereinheit zur drehbaren und axial unverschieblichen Lagerung an der Gelenkwelle dient und wobei das Anschlußelement zur Anbringung eines Schutztrichters zur zumindest teilweisen Überdeckung eines Gelenkes dient, welcher lösbar mit dem Anschlußelement verbunden ist und in einer ersten Drehposition auf eine Sitzfläche des Anschlußelementes axial aufsteckbar bzw. axial von dieser abziehbar ist und in einer zweiten, dazu um einen bestimmten Winkel verdrehten Sicherungsposition axial unverlagerbar gehalten ist, und mit Sicherungsmitteln zur Festlegung des Schutztrichters am Anschlußelement in der Sicherungsposition.

Eine solche Schutzvorrichtung ist in der DE 32 08 541 C1 beschrieben. Die Festlegung des Schutztrichters im Verhältnis zum Anschlußelement erfolgt dabei mittels einer Schraube. Diese tritt durch eine Durchgangsbohrung des Schutztrichters hindurch in eine Bohrung des Anschlußelementes.

Von Nachteil bei einer solchen Ausbildung ist, daß die Schraube verloren gehen kann und damit die Sicherung nicht mehr gegeben ist. Darüber hinaus ist es für die Sicherung erforderlich, daß die Schraube auch tatsächlich wissentlich eingeschraubt wird.

Der Erfindung liegt die Aufgabe zugrunde, eine Schutzvorrichtung zu schaffen, bei der der Schutztrichter im Verhältnis zum Anschlußelement in der Sicherungsposition sicher gehalten und gesichert wird, ohne daß es eines Eingriffs von außen bedarf und bei der ein Lösen der Verbindung nur durch Einsatz eines Werkzeuges möglich ist.

Diese Aufgabe wird erfindungsgemäß dadurch gelöst, daß die Sicherungsmittel eine dem Schutztrichter zugeordnete, federnde Sicherungslasche mit einem Sicherungsansatz und eine dem Anschlußelement zugeordnete Sicherungsausnehmung für den Eingriff des Sicherungsansatzes umfassen, wobei die Sicherungslasche mit ihrem einen Ende am Schutztrichter festgelegt ist und an ihrem anderen Ende der Sicherungsansatz angebracht ist, welcher zum Eingriff in die Sicherungsausnehmung des Anschlußelementes dient.

Von Vorteil bei dieser Ausbildung ist, daß dann, wenn der Schutztrichter im Verhältnis zum Anschlußelement in die Sicherungsposition verdreht ist, die Sicherungslasche ihre ungespannte, d.h. Ausgangsposition einnimmt, wobei der Sicherungsansatz in die Sicherungsausnehmung des Anschlußelementes einrastet. Dies geschieht automatisch. Bei der Montage des Schutztrichters wird der Sicherungsansatz zurückbewegt, sobald er an eine Anlagefläche des Anschlußelementes anläuft, wobei die Sicherungslasche ausfedert. Das Einfedern erfolgt durch Entspannung der Sicherungslasche. Vorzugsweise besteht die Sicherungslasche aus Federstahl.

In der Sicherungsposition, d.h. der Position, in der der Sicherungsansatz in die Sicherungsausnehmung des Anschlußelementes eingerückt ist, liegt die Sicherungslasche eng an der Außenfläche des Schutztrichters an.

Die Aufhebung dieses Zustandes, d. h. das Lösen des Sicherungsansatzes aus der Sicherungsausnehmung des Anschlußelementes, kann nur durch ein Werkzeug erfolgen, mit dem die Sicherungslasche zurückgebogen werden kann, um den Trichter in eine Drehposition überführen zu können, bei der dieser axial vom Anschlußelement abgezogen werden kann.

In Ausgestaltung der Erfindung ist vorgesehen, daß der Sicherungsansatz als mit der Sicherungslasche verbundener Bolzen gestaltet ist. Vorzugsweise ist eine Anordnung der art getroffen worden, daß der Sicherungsansatz einen Durchbruch des Schutztrichters durchgreift und in der Sicherungsposition in eine als Bohrung gestaltete Sicherungsausnehmung des Anschlußelementes formschlüssig eingreift.

Um den Angriff mittels eines Werkzeuges, beispielsweise eines Schraubendrehers zu erleichtern, ist die Sicherungslasche an ihrem Ende, zu dem hin der Sicherungsansatz angeordnet ist, mit einem abgewinkelten Angriffsabschnitt versehen. Hierdurch wird ein Spalt zur Anlagefläche des Trichters gebildet, in den das Werkzeug eingeschoben werden kann.

Vorzugsweise ist die Sicherungslasche mittels Nieten mit dem Schutztrichter verbunden.

Um die Montage zu erleichtern, ist das Anschlußelement mit einer Anlauffläche für den Sicherungsansatz versehen.

Ein bevorzugtes Ausführungsbeispiel der Erfindung und dessen Anwendung bei einer Gelenkwelle ist in der Zeichnung schematisch dargestellt.

Es zeigt
- Figur 1: einen Traktor mit einem daran angehängten Gerät, das über eine mit einer Schutzvorrichtung nach der Erfindung versehene Gelenkwelle angetrieben wird,
- Figur 2: die Gelenkwelle gemäß Figur 1 im vergrößerten Maßstab,
- Figur 3: einen Längsschnitt durch eine Lagereinheit mit einem Anschlußelement, einem Lagerring und einem Abschnitt des Schutztrichters, wobei sich der Schutztrichter in der Sicherungsposition befindet,
- Figur 4: eine Seitenansicht zu Figur 3,
- Figur 5: eine Darstellung vergleichbar zu Figur 3, wobei sich jedoch Schutztrichter im Verhältnis zum Anschlußelement in der Montage bzw. Demontageposition befindet und die Sicherungsmittel außer Eingriff zueinander sind, und
- Figur 6: eine Seitenansicht zu Figur 5.

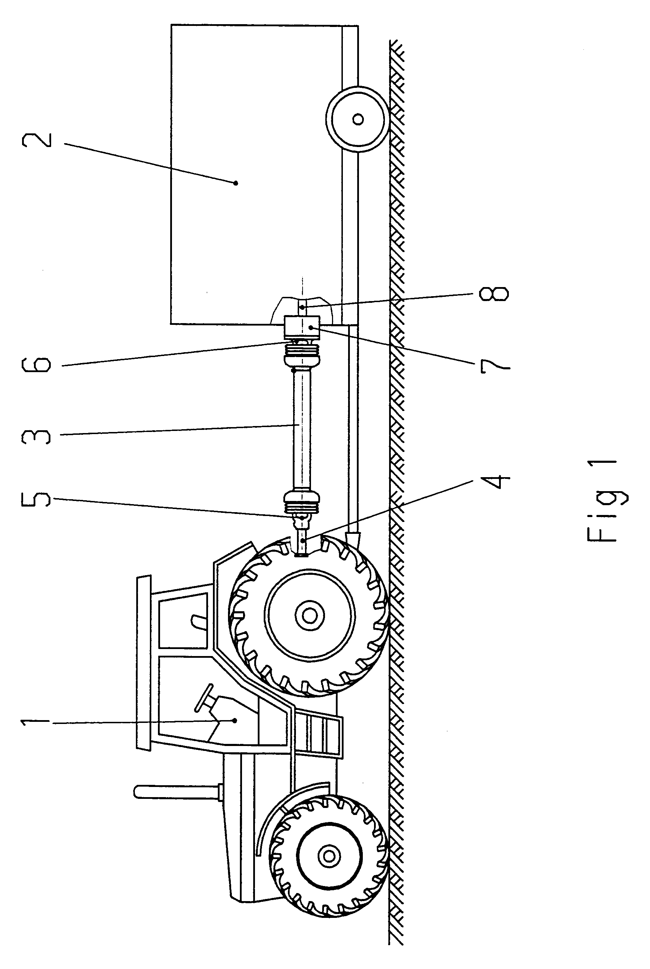

Aus Figur 1 ist der Traktor 1 mit dem angehängten Gerät 2 ersichtlich. Darüber hinaus wird das Gerät 2 mittels der Gelenkwelle 3 von der Zapfwelle 4 des Traktors 1 angetrieben. Hierzu ist das Gelenk 5 der Gelenkwelle 3 auf die Zapfwelle 4 aufgesteckt. Das am anderen Ende angebrachte Gelenk 6 ist an eine Kupplung 7 angeschlossen, die zur Abschaltung bei Erreichung bestimmter Lastzustände dient. Diese wiederum ist antriebsmäßig mit dem Antriebszapfen 8 des Gerätes 2 verbunden.

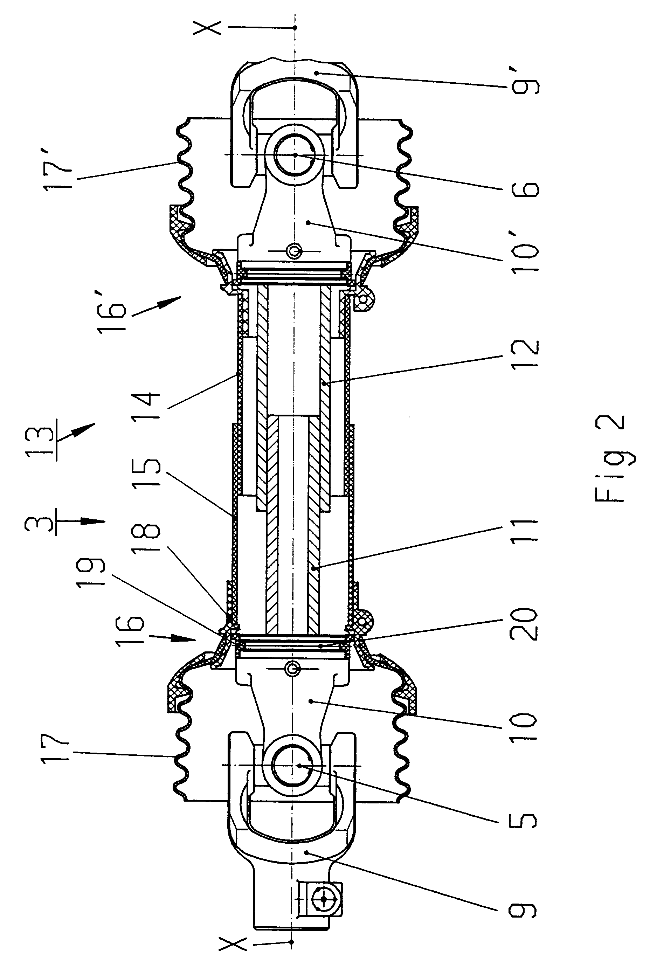

Aus Figur 2 ist die Gelenkwelle 3 im vergrößerten Maßstab ersichtlich. Sie ist im Längsschnitt dargestellt. Die Längsachse der Gelenkwelle 3 ist mit X bezeichnet. Die Gelenkwelle 3 ist im gestreckten Zustand dargestellt. Die Gelenkwelle 3 umfaßt die beiden als Kreuzgelenke gestalteten Gelenke 5,6, wobei die sich an das Gelenk 6 anschließende Kupplung 7 gemäß Figur 1 fortgelassen wurde.

Das Gelenk 5 umfaßt die beiden Gelenkgabeln 9,10, welche mittels eines nicht näher bezeichneten Zapfenkreuzes um zwei Achsen gelenkig verbunden sind. An die Gelenkgabel 10 schließt sich das innere Profilrohr 11 an. Dieses ist in das äußere Profilrohr 12 eingesteckt, welches selbst wiederum fest mit der Gelenkgabel 10' des Gelenkes 6 verbunden ist. Die zweite Gelenkgabel 9' des Gelenkes 6 ist mit der ersten Gelenkgabel 10' mittels eines Zapfenkreuzes abwinkelbar verbunden. Die beiden Profilrohre 11,12 sind ineinander verschiebbar, so daß Abstandsänderungen zwischen den beiden Gelenken 5,6 durch eine entsprechende mehr oder weniger starke Teleskopbewegung ausgeglichen werden können und die Übertragung eines Drehmomentes möglich ist.

Die Gelenkwelle 3 weist ferner eine Schutzvorrichtung 13 auf, die als Berührungsschutz dient, in der die Gelenke 5,6 und Profilrohre 11,12 rotieren. Die Schutzvorrichtung 13 umfaßt ein inneres Schutzrohr 14, das in ein äußeres Schutzrohr 15 eingesteckt ist. Sie umfaßt ferner jeweils einen Schutztrichter 17,17', wobei der Schutztrichter 17 das Gelenk 5 und der Schutztrichter 17' das Gelenk 6 zumindest teilweise überdeckt. Das äußere Schutzrohr 15 ist zusammen mit dem Schutztrichter 17 mittels einer Lagereinheit 16, welche ein Anschlußelement 18 und einen Lagerring 19 umfaßt, der in eine Nut 20 der Gelenkgabel 10 eingreift, zur Gelenkgabel 5 gelagert. Die Lagereinheit 16' ist entsprechend ausgebildet und dient zur Lagerung des inneren Schutzrohres 14 mit dem Schutztrichter 17' auf der Gelenkgabel 10'. Die Schutzrohre 14,15 erlauben eine Verstellung der beiden Profilrohre 11,12, d. h. sie folgen deren Bewegung.

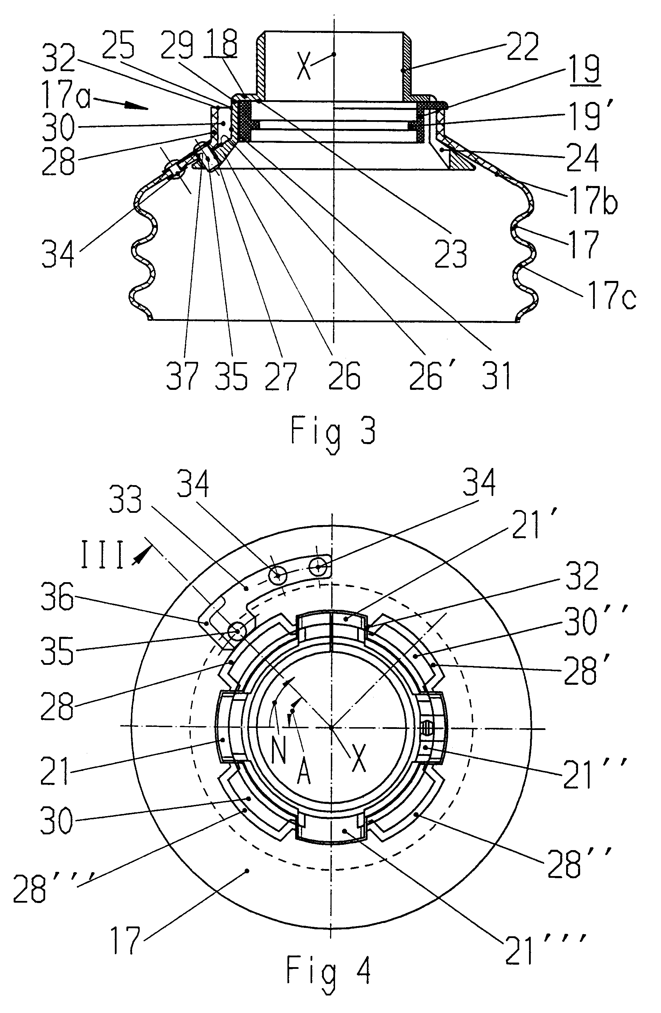

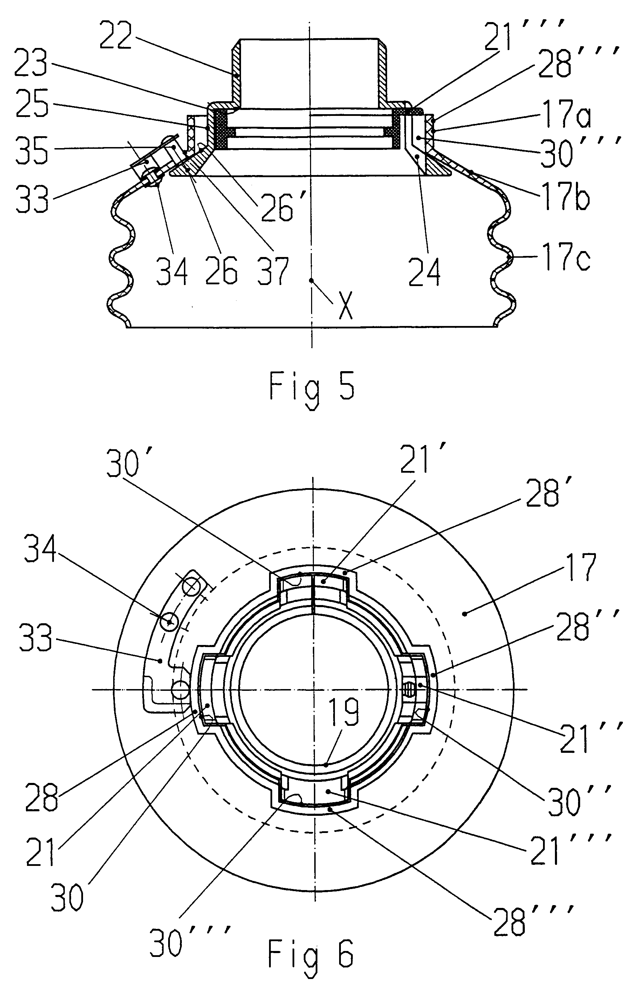

Die Lagereinheit 16 bzw. die Verbindung des Schutztrichters 17 mit dem Anschlußelement 18 zur Sicherung der Einheit gegenüber dem in die Nut der Gelenkgabel 5 eingerasteten Lagerring 19 ist anhand der Figuren 3-6 näher beschrieben. In den Figuren 3 und 4 ist die Sicherungsposition beschrieben, in der die Teile fest miteinander verbunden sind.

Dabei sind das Anschlußelement 18, der Lagerring 19 und der Schutztrichter 17 in ihrer gegenseitigen Zuordnung in der Sicherungsposition unter Fortlassung der übrigen Teile der Gelenkwelle und der Schutzrohre beschrieben. Der Lagerring 19 besitzt einen nach radial innen vorstehenden Lagerabschnitt 19' zum Eingriff in die Nut der Gelenkgabel. Der Lagerring 19 ist radial an einer Stelle geschlitzt, so daß er aufgefedert werden und in Eingriff zur Nut der Gelenkgabel gebracht werden kann. Der Lagerring 19 besitzt vier umfangsverteilte Haltelaschen 21,21',21'',21''', die radial nach außen vorstehen und zu einer Stirnfläche des Lagerringes 19 hin angeordnet sind.

Das Anschlußelement 18 besitzt einen als Rohrabschnitt ausgebildeten Anschlußstutzen 22, der zur Verbindung mit dem inneren oder äußeren Schutzrohr dient. Hierzu können beispielsweise noch Vorsprünge vorgesehen sein, die eine Verrastung zwischen dem Anschlußstutzen 22 und dem zugehörigen Schutzrohr in formschlüssiger Weise bewirken.

An den Anschlußstutzen 22 schließt sich ein im Durchmesser vergrößerter Befestigungsabschnitt 29 an, der eine Aufnahmebohrung für die Außenfläche des Lagerringes 19 besitzt, d. h. der Lagerring 19 sitzt im montierten Zustand in der Bohrung des Befestigungsabschnittes 29 ein und wird von dieser fest umschlossen. Im Befestigungsabschnitt 29 sind ausgehend von dem dem Befestigungsabschnitt 22 abgewandten Ende des Anschlußelementes 18 Durchbrüche 24 vorgesehen, die hinsichtlich ihrer Umfangsverteilung und hinsichtlich ihrer Abmessungen an die Anordnung bzw. Abmessung der Haltelaschen 21,21',21'',21''' des Lagerringes 19 angepaßt sind, so daß diese die Durchbrüche 24 für das Aufstekken des Aschlußelementes 18 auf den in die Nut der Gelenkgabel eingefederten Lagerring 19 passieren können, bis der Lagerring 19 mit seiner Stirnfläche, zu der hin die Haltelaschen 21,21',21'',21''' angeordnet sind, gegen die Anlagefläche 23, die radial zwischen dem Anschlußstutzen 22 und dem Befestigungsabschnitt 29 verläuft, zur Anlage kommt.

Die Außenfläche des Befestigungsabschnittes 29 bildet eine zylinderische Sitzfläche 25. Im Anschluß an den Befestigungsabschnitt 29 ist das Anschlußelement 18 mit einem vom Durchmesser des Befestigungsabschnittes 29 nach außen sich kegelig erweiternden Stützabschnitt 26 versehen. Der Stützabschnitt 26 besitzt außen, d. h. zur Sitzfläche 25 hin eine Anlauffläche 26'. In dem Stützabschnitt 26 ist eine Sicherungsausnehmung in Form eines Durchbruches 27 vorgesehen. Der Schutztrichter 17 ist mit der Zentrierbohrung 31 seines Befestigungsabschnittes 17a auf den Befestigungsabschnitt 29 bzw. der Sitzfläche 25 des Anschlußelementes 18 aufgeschoben. An den Befestigungsabschnitt 17a schließt sich ein kegelig erweiterter Kegelabschnitt 17b an, der in einen Faltenabschnitt 17c übergeht, der das Gelenk überdeckt. Der Kegelabschnitt 17b stützt sich axial gegen den Stützabschnitt 26 des Anschlußelementes 18 ab. Der Befestigungsabschnitt 17a endet in der Stirnfläche 32, die als Sicherungsfläche dient. Der Befestigungsabschnitt 17a des Trichters 17 weist umfangsverteilt radial nach außen gerichtete Ausformungen 28, 28',28'',28''' auf, die der Anzahl nach und der Umfangsverteilung der Haltelaschen 21,21',21'',21''' des Lagerringes 19 entsprechend ausgebildet und angeordnet sind. Durch die Ausformungen 28,28',28'',28''' verlaufen Durchtrittskanäle 30,30',30'',30''' hindurch, die sich mit den Durchbrüchen 24 ergänzen. Dem Schutztrichter 17 ist im Bereich des Kegelabschnittes 17 b eine Sicherungslasche 33 zugeordnet, die federnd ausgebildet ist. Sie besteht aus Federstahl und ist mit ihrem einen Ende mittels Nieten 34 mit dem Kegelabschnitt 17b fest verbunden. Der nicht eingespannte Abschnitt der Sicherungslasche 33 ist federnd ausgebildet. Sie trägt zu ihrem anderen, d.h. freien Ende hin, einen Sicherungsansatz 35 in Form eines an die Sicherungslasche 33 angenieteten Bolzens, der aufgrund der Federwirkung zum Eingriff in den Durchbruch 27 beaufschlagt wird. Der Befestigungsansatz 35 durchragt einen Durchbruch 37 des Kegelabschnittes 17 b des Schutztrichters 17.

Die Sicherungslasche 33 ist an ihrem freien Ende, d.h. dem Ende, dem der Sicherungsansatz 35 benachbart ist, mit einem abgewinkelten Abschnitt als Angriffsabschnitt 36 versehen, so daß ein Spalt zwischen der Sicherungslasche 33 und dem Kegelabschnitt 17b gebildet wird.

Ansonsten ist der Verlauf der Sicherungslasche 33 dem des Kegelabschnittes 17 b angepaßt, so daß eine enge Anlage gegeben ist, wenn der Sicherungsansatz 35 in Eingriff zur als Durchbruch gestalteten Sicherungsausnehmung 27 ist. Der Eingriff des Sicherungsansatzes 35 in die Sicherungsausnehmung 27 ist jedoch nur dann möglich, wenn sich der Schutztrichter 17 im Verhältnis zum Anschlußelement 18 in einer Drehposition befindet, bei der die Ausformung 28,28',28'',28''' im Verhältnis zu den Haltelaschen 21,21',21'',21''' des Lagerringes 19 um den Winkel A um die Achse X im rechtsdrehenden Sinne (N) verschwenkt worden ist. In diesem Zustand befindet sich der Wandungsabschnitt des Befestigungsabschnittes 17 a der sich radial nach außen unmittelbar an die Sitzfläche 25 anschließt, jeweils zwischen zwei Ausformungen 28,28,',28'',28''' und der zum Kegelabschnitt 26 hinweisenden Stirnfläche der Haltelaschen 21,21',21'',21''', so daß Schutztrichter 17 und Anschlußelement 18 einerseits und Anschlußelement 18 und Lagerring 19 andererseits axial fest miteinander verbunden sind. Darüber hinaus ist der Trichter 17 mittels der Sicherungslasche 33 und des Sicherungsansatzes 35 in Umfangsrichtung, d. h. in Drehrichtung um die Achse X fest mit dem Anschlußelement 18 verbunden.

Zur Demontage wird die Sicherungslasche 33 durch Einführen eines Werkzeuges in den Spalt zwischen dem Angriffsabschnitt 36 und der Oberfläche des Kegelabschnittes 17b des Schutztrichters 17 eingeführt und die Sicherungslasche 33 angehoben, so daß der Sicherungsansatz 35 aus der Sicherungsausnehmung 27 austritt.

Sodann kann der Schutztrichter 17 im Verhältnis zum Anschlußelement 18 beispielsweise entgegen der Pfeilrichtung N um den Winkel A im linksschwenkenden Sinne verschwenkt werden, bis die Durchtrittskanäle 30,30',30'',30''' jeweils zu den Haltelaschen 21,21',21'',21''' in eine übereinstimmende Lage gebracht sind.

Sodann kann der Schutztrichter 17 axial in Richtung des Anschlußstutzens 22 und damit von der Sitzfläche 25 abgezogen werden. Die Montage erfolgt umgekehrt, indem der Schutztrichter 17 mit seinem Befestigungsabschnitt 17a auf den Befestigungsabschnitt 29 des Anschlußelementes 18 zu bewegt wird. Da in diesem Zustand der Sicherungsansatz 35, der den Durchbruch 37 nach innen durchragt, gegen die Anlauffläche 26' des Stützabschnittes 26 des Anschlußelementes 18 anstößt, wird die Sicherungslasche 33 bei weiterer axialer Bewegung des Schutztrichters 17 auf den Stützabschnitt 26 zu vorgespannt. Nachdem der Schutztrichter 17 mit seinem Befestigungsabschnitt 17a die Haltelaschen 21,21',21'',21''' passiert hat, kann der Schutztrichter 17 in Richtung des Pfeiles N um den Winkel A zum Anschlußelement 18 um die Achse X verdreht werden. Bei Erreichen einer übereinstimmenden Position des Sicherungsansatzes 35 zum Durchbruch 27 wird dieser aufgrund der Vorspannung der Sicherungslasche 33 in die in Figur 3 dargestellte Position und damit in Eingriff zur Sicherungsausnehmung 27 bewegt, so daß die Teile wieder fest miteinander verbunden sind.

### Bezugszeichenliste

- 1: Traktor
- 2: Gerät
- 3: Gelenkwelle
- 4: Zapfwelle
- 5,6: Gelenk/Kreuzgelenk
- 7: Kupplung
- 8: Antriebszapfen
- 9,9',10,10': Gelenkgabel
- 11: inneres Profilrohr
- 12: äußeres Profilrohr
- 13: Schutzvorrichtung
- 14: inneres Schutzrohr
- 15: äußeres Schutzrohr
- 16,16': Lagereinheit
- 17,17': Schutztrichter
- 17a: Befestigungsabschnitt
- 17b: Kegelabschnitt
- 17c: Faltenabschnitt
- 18: Anschlußelement
- 19: Lagerring
- 19': Lagerabschnitt
- 20: Nut
- 21,21',21'',21''': Haltelaschen
- 22: Anschlußstutzen
- 23: Anlagefläche
- 24: Durchbruch
- 25: Sitzfläche
- 26: Stützabschnitt
- 26': Anlauffläche
- 27: Sicherungsausnehmung / Durchbruch
- 28,28',28'',28''': Ausformung
- 29: Befestigungsabschnitt
- 30,30',30'',30''': Durchtrittskanal
- 31: Zentrierbohrung
- 32: Sicherungsfläche/Stirnfläche
- 33: Sicherungslasche
- 34: Niete
- 35: Sicherungsansatz
- 36: Angriffsabschnitt
- 37: Durchbruch
- A: Winkel
- N: Drehrichtung
- X: Längsachse/Drehachse

## Patentansprüche

1. Schutzvorrichtung (13) für eine zumindest zwei Gelenke (5,6) und eine aus zwei Schiebeprofilen (11,12) bestehende Längsverschiebung umfassende Gelenkwelle (3), die für den Antrieb von oder Antriebe in Landmaschinen (2) bzw. landwirtschaftlichen Geräten gedacht ist, mit zwei zu den Schiebeprofilen (11,12) koaxialen, ineinander teleskopartig verschiebbaren Schutzrohren (14,15), mit jeweils einer am freien Ende der Schutzrohre (14,15) angebrachten Lagereinheit (16), die ein Anschlußelement (18) und einen diesem zugeordneten Lagerring (19) umfaßt, wobei die Lagereinheit (16,16') zur drehbaren und axial unverschieblichen Lagerung an der Gelenkwelle (3) dient und wobei das Anschlußelement (18) zur Anbringung eines Schutztrichters (17,17') zur zumindest teilweisen Überdeckung eines Gelenkes (5,6) dient, welcher lösbar mit dem Anschlußelement (18) verbunden ist und in einer ersten Drehposition auf eine Sitzfläche (25) des Anschlußelementes (18) axial aufsteckbar bzw. axial von dieser abziehbar ist und in einer zweiten, dazu um einen bestimmten Winkel (A) verdrehten Sicherungsposition axial unverlagerbar gehalten ist, und mit Sicherungsmittels (27,33,35) zur Festlegung des Schutztrichters (17,17') am Anschlußelement (18) in der Sicherungsposition,
dadurch gekennzeichnet,
daß die Sicherungsmittel eine dem Schutztrichter (17,17') zugeordnete, federnde Sicherungslasche (33) mit einem Sicherungsansatz (35) und eine dem Anschlußelement (18) zugeordnete Sicherungsausnehmung (27) für den Eingriff des Sicherungsansatzes (35) umfassen, wobei die Sicherungslasche (33) mit ihrem einen Ende am Schutztrichter (17,17') festgelegt ist und an ihrem anderen Ende der Sicherungsansatz (35) angebracht ist, welcher zum Eingriff in die Sicherungsausnehmung (27) des Anschlußelementes (18) dient.

2. Schutzvorrichtung nach Anspruch 1,
dadurch gekennzeichnet,
daß der Sicherungsansatz (35) als mit der Sicherungslasche (33) verbundener Bolzen gestaltet ist.

3. Schutzvorrichtung nach einem der Ansprüche 1 oder 2,
dadurch gekennzeichnet,
daß der Sicherungsansatz (35) einen Durchbruch (37) des Schutztrichters (17,17,') durchgreift und in der Sicherungsposition in eine als Bohrung gestaltete Sicherungsausnehmung (27) des Anschlußelementes (18) formschlüssig eingreift.

4. Schutzvorrichtung nach einem der Ansprüche 1-3,
dadurch gekennzeichnet,
daß die Sicherungslasche (33) an ihrem Ende, zu dem hin der Sicherungsansatz (35) angeordnet ist, einen abgewinkelten Angriffsabschnitt (36) für ein Werkzeug aufweist, der einen Freiraum zum Schutztrichter (17,17') läßt.

5. Schutzvorrichtung nach einem der Ansprüche 1-4
dadurch gekennzeichnet,
daß die Sicherungslasche (33) mittels Nieten (34) mit dem Schutztrichter (17,17') verbunden ist.

6. Schutzvorrichtung nach einem der Ansprüche 1-5,
dadurch gekennzeichnet,
daß das Anschlußelement (18) mit einer Anlauffläche (26') für den Sicherungsansatz (35) versehen ist.
